# EUROPÄISCHE PATENTSCHRIFT

(11) **EP 1 964 651 B1**
(45) Veröffentlichungstag und Bekanntmachung des Hinweises auf die Patenterteilung: **19.01.2011**
(21) Anmeldenummer: 08150754.3
(22) Anmeldetag: 29.01.2008
(51) Int. Cl.: B25J 17/02, B25J 19/00, B66C 13/12, H02G 11/00

(54) **Roboterarm für einen Industrieroboter**
Robotic arm for an industrial robot
Bras de robot pour un robot industriel

(30) Priorität: 28.02.2007 DE 102007009850
(43) Veröffentlichungstag der Anmeldung: 03.09.2008
(73) Patentinhaber: KUKA Roboter GmbH, 86165 Augsburg (DE)
(72) Erfinder: Karlinger Stefan, 86199 Augsburg (DE)
(74) Vertreter: Patentanwälte Funk & Böss GbR

(56) Entgegenhaltungen:
- EP-A- 0 873 826
- EP-A- 1 568 449
- EP-A- 1 588 807
- JP-A- 3 117 584
- JP-A- 2006 021 299

## Beschreibung

Die Erfindung betrifft einen Roboterarm für einen Industrieroboter.

Industrieroboter sind Handhabungsmaschinen, die zur selbsttätigen Handhabung und Bearbeitung von Objekten mit zweckdienlichen Werkzeugen, zum Beispiel als eine Art Hand bzw. eine so genannte Zentralhand, ausgerüstet und in mehreren Bewegungsachsen insbesondere hinsichtlich Orientierung, Position und Arbeitsablauf programmierbar sind.

Unter einer Energiezuführung ist ein flexibles Schlauchpaket zu verstehen, welches unterschiedliche Leitungen, wie zum Beispiel elektrische Leitungen für Leistung-, Steuer- und Messzwecke, sowie Fluidzu- und ableitungen, für ein Werkzeug des Industrieroboters aufweist

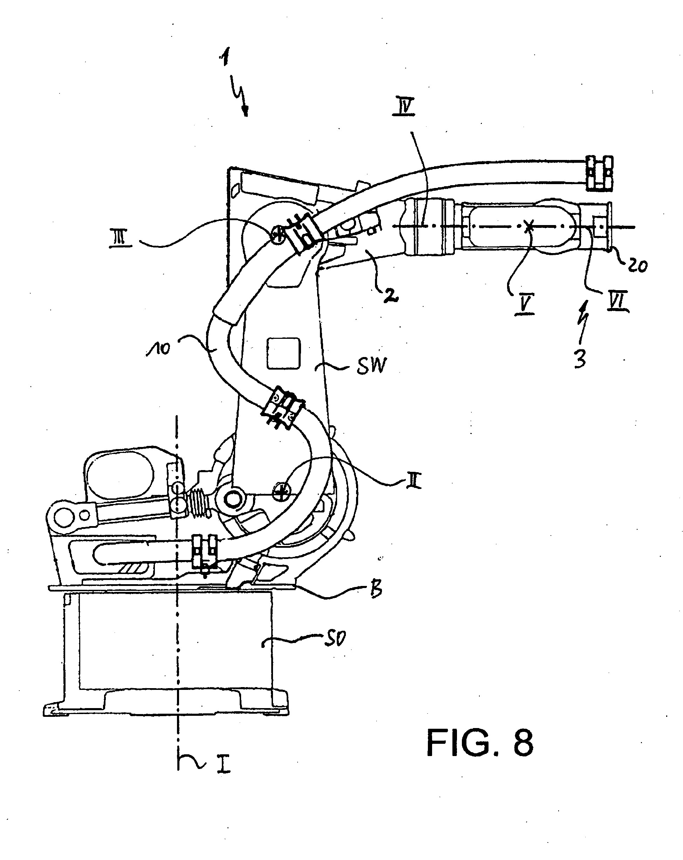

Zur weiteren Erläuterung ist in Fig. 8 ein beispielhafter Industrieroboter als ein Beispiel mit einer außen liegenden Energiezuführung dargestellt. Er weist in diesem Beispiel 6 Achsen I bis VI auf: Achse I ist eine vertikale Drehachse einer Basis B in Bezug auf einen Sockel SO des Roboters 1. Achse II ist eine horizontale Drehachse einer Schwinge SW. Achse III ist eine horizontale Drehachse eines Arms mit einer Armbasis 2, wobei dessen Längsachse als Achse IV bezeichnet ist. An dem langen Ende des Arms ist ein Anschlussflansch 20 für ein Werkzeug 3 angeordnet. Der Anschlussflansch 20 ist zusammen mit einer Achse V um Achse IV drehbar und weist selbst eine Längsachse VI auf, um welche das Werkzeug 3 ebenfalls unabhängig drehbar ist.

Eine Energiezuführung 10 ist in Fig. 8 von der Basis B außen an den Abschnitten des Roboters 1 zum Anschlussflansch 20 geführt. Als nachteilig ist bei dieser Ausführung anzusehen, dass die Energiezuführung 10 durch die Bewegungen des Werkzeugs 3 am Anschlussflansch über das Werkzeug 3 geschleift, verdreht und derart beansprucht wird, dass sie einem beträchtlichen Verschleiß unterliegt.

Es sind daher Lösungen vorgeschlagen worden, bei denen die Energiezuführung 10 zwischen der Achse III und der Achse VI des Roboters 1 innerhalb des Roboteraufbaus verlegt ist.

EP 873 826 B1 beschreibt eine Roboterunterbaueinheit eines Industrieroboters mit einem hohlen Arm, der an einem Ende Gelenkelemente trägt und aus konzentrischen Rohrwellen besteht, die an dem anderen Ende des Arms von Antrieben drehbar antreibbar sind. Die Gelenkelemente und konzentrischen Rohrwellen weisen innen einen freien Platz zur Durchführung von elektrischen Leitungen und Fluidzuführleitungen für ein Werkzeug auf. Das Werkzeug ist an einen Standardvorderflansch koppelbar, wobei dieser Standardvorderflansch mit einer Vielzahl radialer Ausgänge für die elektrischen Leitungen und Fluidzuführleitungen versehen ist.

EP 1 243 384 A1 beschreibt einen Handgelenkaufbau für einen Roboter, bei dem ein Bauteil zur Verlegung von Rohr-/Schlauchleitungen und Verdrahtung zu einem Endstellorgan eines Roboters aus einem ersten Handgelenkelement in einen Hohlraum geführt ist, welcher von einer Achse entfernt angeordnet ist, wobei es gebogen und gelöst ist, und dann zu einem Durchgang geführt ist. Jede Längenänderung des Bauteils zur Verlegung von Rohr-/Schlauchleitungen und Verdrahtung auf Grund von Verdrehungen von zweiten und dritten Handgelenkelementen wird in diesem Hohlraum so aufgefangen, dass ein Herumwickeln oder Einritzen durch ein Handgelenk verhindert werden kann. Antriebe für eine Verstellung der Handgelenke sind an einem den Handgelenken gegenüberliegenden Ende des Arms angeordnet.

EP 1 257 390 B1 beschreibt einen Industrieroboter mit einem Handgelenk, welches eine hohle Drehvorrichtung mit einer konischen Mantelfläche zur Durchführung von Versorgungsleitungen aufweist. Für diese Durchführung besitzt die konische Mantelfläche Öffnungen, welche eine parallel zur dritten Achse ausgerichtete Komponente enthalten. Diese Öffnungen gestatten beim Betrieb des Industrieroboters eine Verschiebung der Versorgungsleitungen in Längsrichtung.

DE 102 24 858 B4 beschreibt eine Vorrichtung zur Führung mindestens eines Schlauches, die eine Rinne mit seitlicher Längsöffnung aufweist, wobei der Schlauch in der Rinne von einer Spannfeder umgeben ist.

EP 1 588 807 A1 beschreibt eine Vorrichtung zum Führen von länglichen, flexiblen Elementen mit eine Feder zum Zurückholen des flexiblen Elements, wobei das flexible Element außerhalb des Arms eines Industrieroboters läuft.

Die Aufgabe der Erfindung ist es, einen Roboterarm für einen Industrieroboter anzugeben, welcher im Vergleich zum Stand der Technik eine verbesserte Zuverlässigkeit und einfachere Instandhaltung aufweist.

Eine weitere Aufgabe der Erfindung ist es, einen entsprechenden Roboter anzugeben.

Die Aufgabe der Erfindung wird gelöst durch einen Roboterarm für einen Industrieroboter, aufweisend:
einen Anschlussflansch für ein Werkzeug, welcher an einer Armbasis über zumindest ein Hohlgelenk um zumindest eine Achse relativ zu der Armbasis drehbar angeordnet ist;
eine Energiezuführung für das Werkzeug, welche sich durch einen Hohlraum der Armbasis und durch das zumindest eine Hohlgelenk in den Anschlussflansch erstreckt;
wobei zumindest ein Einzelstrang der Energiezuführung seitlich aus dem Anschlussflansch herausgeführt, und von außen lösbar am Anschlussflansch befestigt ist und die Energiezuführung mit einer ersten Feder in Zusammenwirkung steht, durch welche die Energiezuführung in ihrem Verlauf durch die Armbasis bis zum Anschlussflansch vorgespannt ist.

Somit ergibt sich ein äußerst kompakter Aufbau dieses Roboterarms. Gleichzeitig wird die Energiezuführung mittels der ersten Feder bei jeder Stellung des Arms bzw. der Armbasis und des Werkzeugs in einem gespannten Zustand gehalten, was auf Grund der Befestigung der Einzelstränge der Energiezuführung in dem Anschlussflansch in einfacher Weise ermöglicht ist. Weiterhin ist der Anschlussflansch so gestaltet, dass einerseits eine einfache Vormontage der Einzelstränge möglich ist, wobei deren Einsatz in den Anschlussflansch ohne zusätzliches Werkzeug erfolgen kann.

Dazu kann der Anschlussflansch erfindungsgemäß einen an ihm befestigbaren Flanschdeckel zur Anbringung des Werkzeugs aufweisen. Durch ein einfaches Austauschen dieses Flanschdeckels lassen sich weitere Werkzeuge mit anderen Befestigungen schnell an- und abbauen.

Zur Durchführung und Befestigung des zumindest einen Einzelstrangs der Energiezuführung kann der Anschlussflansch zumindest ein Durchführungselement aufweisen. Dieses kann zum Beispiel eine herkömmliche Kabelverschraubung sein, welche auch einen bestimmten Dichtigkeitsgrad (IP-Klasse bzw. - Schutzart) besitzt und in hoher Qualität und geringem Preis verfügbar ist. Das Durchführungselement kann als ein Einzelstrang umgebendes elastisches Klemmteil ausgeführt sein. Das Klemmteil kann einstückig mit einer Mehrzahl von Durchführungsöffnungen für Einzelstränge ausgebildet sein. Zum Einfügen eines Einzelstranges in die Durchführungsöffnungen kann ein seitlicher Einführungsschlitz vorgesehen sein. Das Klemmteil kann mittels eines Haltebügels am Anschlussflansch lösbar befestigt sein.

Für eine einfache Verlegung und Führung der Einzelstränge kann der Anschlussflansch zumindest einen radialen Kanal zur Führung des zumindest einen Einzelstrangs aufweisen.

Nach einer Ausführungsform des erfindungsgemäßen Roboterarms kann das zumindest eine Durchführungselement auf einem Halteelement angeordnet sein, welches am Anschlussflansch befestigbar ist. Hierbei kann das Halteelement Bohrungen aufweisen, welche mit am Anschlussflansch und am Flanschdeckel angebrachten korrespondierenden Stiften derart in Eingriff bringbar sind, dass das Halteelement bei an dem Anschlussflansch befestigten Flanschdeckel mit diesem und dem Anschlussflansch form- und kraftschlüssig verbunden ist. Somit übernimmt der Flanschdeckel die weitere Aufgabe einer einfachen und schnellen Befestigung der Halteelemente für die Durchführungselemente. Dadurch ist es möglich, dass die Durchführungselemente erst an den Einzelsträngen der Energiezuführung montiert werden und danach in die vorgesehenen Aufnahmen am Anschlussflansch in einfacher Weise ohne zusätzliches Werkzeug eingesteckt werden können. Dadurch ergibt sich eine vereinfachte Montage.

In einer alternativen Ausführungsform ohne Stifte können die Halteelemente mittels Schrauben am Anschlussflansch befestigt sein.

Gemäß einer weiteren Ausführungsform ist der Anschlussflansch über ein erstes Hohlgelenk drehbar um eine erste Achse, welche die Längsachse der Armbasis ist, über ein zweites Hohlgelenk drehbar um eine in einem Winkel zu der ersten Achse verlaufende zweite Achse und über ein drittes Hohlgelenk drehbar um eine in einem Winkel zu der zweiten Achse verlaufende dritte Achse angeordnet. Der Roboterarm kann in dieser Ausführung zum Beispiel 3 Achsen aufweisen.

Hierbei kann das erste Hohlgelenk ein erstes Getriebe mit einem daran angeordneten ersten Antrieb zur Drehung des zweiten Hohlgelenks um die erste Achse, das zweite Hohlgelenk ein zweites Getriebe mit einem daran angeordneten zweiten Antrieb zur Drehung des dritten Hohlgelenks um die zweite Achse und das dritte Hohlgelenk ein drittes Getriebe mit einem daran angeordneten dritten Antrieb zur Drehung des Anschlussflansches um die dritte Achse sein.

Da die Antriebe in dieser Ausführung für die einzelnen Achsen direkt an den Gelenken angeordnet sind, kann somit auf Hohlwellen verzichtet werden. Dazu sind die Getriebe zum Beispiel als Hohlwellengetrieb ausgelegt.

Gemäß einer weiteren Ausführungsform des erfindungsgemäßen Roboterarms ist die Energiezuführung zumindest abschnittsweise mit einem Schutzelement umgeben. Dieses kann zum Beispiel eine Art Wellrohr sein, welches sowohl eine bestimmte Dichtigkeit als auch Längenveränderlichkeit bietet. Hierbei ist es vorgesehen, dass ein solches Wellrohr als ein erstes Schutzelement die Energiezuführung vor Eintritt in den Arm umgibt. Ein zweites Schutzelement ebenfalls in Gestalt eines Wellrohrs umgibt die Energiezuführung zwischen dem ersten Hohlgelenk und dem dritten Hohlgelenk. Dadurch wird ein Auseinandergleiten der Einzelstränge verhindert, wodurch die Gefahr von Beschädigungen der Einzelstränge von außen eliminiert ist.

Eine noch weitere Ausführungsform sieht vor, dass die erste Feder zwischen einem ersten Auflager, welches mit dem ersten Schutzelement fest verbundenen ist, und an der Armbasis angeordnet ist. Hier kann zum Beispiel ein an der Armbasis befestigtes zweites Auflager vorgesehen sein. Auf diese Weise dient das erste Schutzelement gleichzeitig als Übertragungsglied zur Einleitung der Federkraft in die Energiezuführung, um so eine bestimmte Vorspannung in der Energiezuführung innerhalb der Armbasis bis zum Anschlussflansch aufrecht zu erhalten. Da die Einzelstränge in den Durchführungselementen am Anschlussflansch befestigt sind, wird so die Energiezuführung bei Betrieb des Industrieroboters derart vorgespannt, dass in allen Stellungen des Werkzeugs zum Beispiel ein Aufspleißen der Einzelstränge und eine unkontrollierte Verwindung derselben verhindert werden.

Gemäß einer noch weiteren Ausführungsform wird eine jeweilige Antriebsverkabelung eines Antriebs zusammen mit der Energiezuführung durch das erste Hohlgelenk in Richtung der ersten Achse geführt. Dazu ist vorgesehen, dass die Antriebsverkabelungen und die Energiezuführung durch eine Zweikammerführungsbuchse durch das erste Hohlgelenk geführt angeordnet sind. Für den Zweck einer leichten und reibungslosen Führung der Antriebsverkabelung kann die Zweikammerführungsbuchse zumindest auf einer Seite mit einem Kragen versehen sein.

Auch die Antriebsverkabelung kann mit einer zweiten Feder versehen sein, um eine Vorspannung in ihr zu erzeugen, die unabhängig von derjenigen der Energiezuführung ist. Auf diese Weise ist hiermit und mittels der Zweikammerführungsbuchse eine Bewegung der Energiezuführung unabhängig von der Antriebsverkabelung ermöglicht.

Die Aufgabe der Erfindung wird auch gelöst durch einen Industrieroboter, aufweisend den oben beschriebenen Roboterarm.

Ausführungsbeispiele der Erfindung sind exemplarisch in den beigefügten schematischen Zeichnungen dargestellt. Es zeigen:
- Fig. 1a: eine perspektivische Darstellung einer bei- spielhaften Ausführungsform des erfindungsge- mäßen Roboterarms in einer ersten Stellung;
- Fig. 1b: eine perspektivische Darstellung einer weite- ren beispielhaften Ausführungsform des erfin- dungsgemäßen Roboterarms in einer ersten Stellung;
- Fig. 2: die Ausführungsform nach Fig. 1a in einer zweiten Stellung;
- Fig. 3: die Ausführungsform nach Fig. 1a in der ers- ten Stellung in einer um 180° gedrehten An- sicht;
- Fig. 4a: eine vergrößerte perspektivische Darstellung eines Anschlussflansches der Ausführungsform nach Fig. 1a;
- Fig. 4b: eine vergrößerte perspektivische Darstellung des Anschlussflansches der Ausführungsform nach Fig. 1b;
- Fig. 5: eine perspektivische Teilansicht eines ersten Hohlgelenks aus Fig. 1a, 1b mit Energiezufüh- rung und Antriebsverkabelung;
- Fig. 6a-6c: eine Seitenansicht des ersten Hohlgelenks nach Fig. 5 und zwei Draufsichten des ersten Hohlgelenks;
- Fig. 7: eine beispielhafte Darstellung eines erfin- dungsgemäßen Industrieroboters mit einem er- findungsgemäßen Roboterarm; und
- Fig. 8: eine beispielhafte Darstellung eines Indust- rieroboters mit außenliegender Energiezufüh- rung zur Begriffserläuterung.

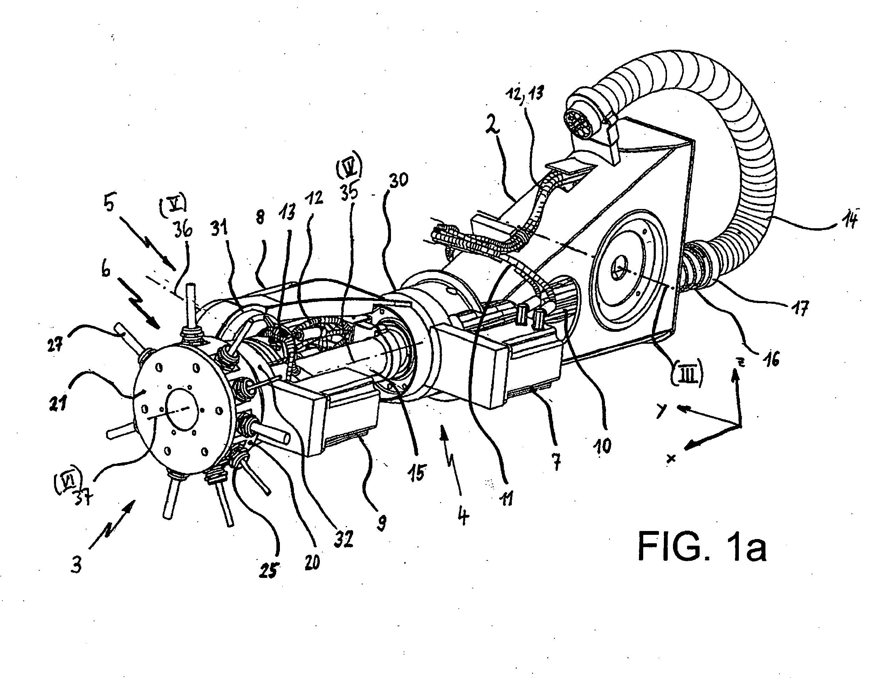

Wie oben in der Beschreibungseinleitung erläutert, weist der in Fig. 8 dargestellte Industrieroboter mehrere Achsen I bis VI auf. Jede der Achsen I bis VI wird mit einem Antrieb, zum Beispiel mit einem elektrischen Motor, über zugehörige Getriebe angetrieben, wobei diese Motoren in nicht dargestellter Weise mit einem Steuerrechner elektrisch verbunden sind, so dass der Steuerrechner die Motoren derart ansteuern kann, dass die Position und Orientierung des Anschlussflansches 20 und somit des am Roboter 1 befestigten Werkzeugs 3, das in Fig. 1a, 2, 3, 4, 7 und 8 nur durch das Bezugszeichen 3 angedeutet ist, im Wesentlichen frei im Raum ausgerichtet werden kann.

Im Falle des vorliegenden Ausführungsbeispiels eines Roboterarms für eine Energiezuführung für das Werkzeug 3 des Roboters 1 in einer ersten Stellung zeigt Fig. 1a eine Armbasis 2 mit einem an dem in der Figur gezeigten vorderen Ende der Armbasis 2 angebrachten Anschlussflansch 20 für das hier nicht gezeigte Werkzeug 3 in einer ersten Stellung. Ein Koordinatensystem mit Koordinaten x, y, z dient zur Orientierung. Die Achsenbezeichnungen in römischen Ziffern gemäß Fig. 8 sind in Klammern eingetragen, um den Bezug zu der allgemeinen Bezeichnung der Roboterachsen gemäß Fig. 8 herzustellen.

Die Armbasis 2 ist in diesem Beispiel ein dreieckartiger Kasten, zum Beispiel aus Stahlplatten geschweißt, welcher an seinem vorderen Ende in Richtung der x-Koordinate, die hier in seiner Längsrichtung, die hier als erste Achse 35 bezeichnet ist und mit der Achse IV aus Fig. 8 übereinstimmt, mit einem ersten Hohlgelenk 4 versehen ist. Das Hohlgelenk 4 weist ein erstes Getriebe 30, zum Beispiel ein Hohlwellengetriebe, auf, welches mit einem ersten Antrieb 7 gekoppelt ist. Der Antrieb 7 ist direkt an dem ersten Getriebe 30 angeordnet.

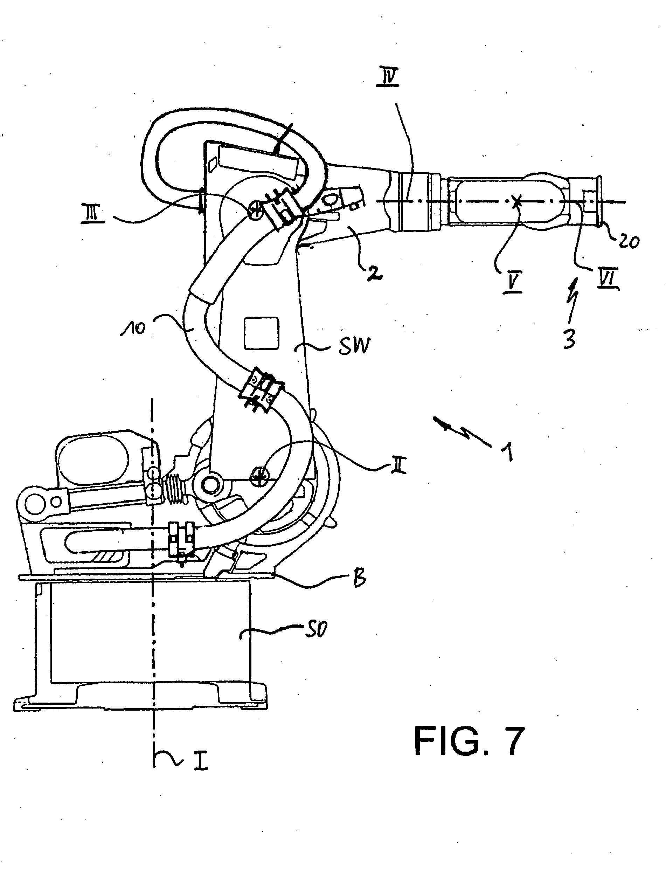

Das erste Hohlgelenk 4 ist starr mit einem zweiten Hohlgelenk 5 gekoppelt, welches eine in diesem Beispiel rechtwinklig zur ersten Achse 35 verlaufende zweite Achse 36, die der Achse V gemäß Fig. 7 entspricht, aufweist und um die erste Achse 35 mittels des ersten Antriebs 7 verdrehbar ist.

Das zweite Hohlgelenk 5 weist ein zweites Getriebe 31, zum Beispiel ebenfalls ein Hohlwellengetriebe, auf, welches mit einem zweiten Antrieb 8 gekoppelt ist. Auch dieser Antrieb 8 ist direkt an dem zweiten Getriebe 31 angeordnet.

Das zweite Hohlgelenk 5 ist auch mit einem Hohlgelenk gekoppelt, nämlich mit einem dritten Hohlgelenk 6, welches eine in diesem Beispiel rechtwinklig zur zweiten Achse 36 verlaufende dritte Achse 37 in Richtung der y-Koordinate, die der Achse VI gemäß Fig. 7 entspricht, aufweist und um die zweite Achse 36 mittels des zweiten Antriebs 8 verdrehbar ist.

Das dritte Hohlgelenk 6 weist ein drittes Getriebe 32, zum Beispiel auch ein Hohlwellengetriebe, auf, welches mit einem dritten Antrieb 9 gekoppelt ist. Der Antrieb 9 ist ebenfalls direkt an dem dritten Getriebe 32 angeordnet.

Das dritte Hohlgelenk 6 ist mit einem Anschlussflansch 20 gekoppelt, welcher um die dritte Achse 37 mittels des dritten Antriebs 9 verdrehbar ist.

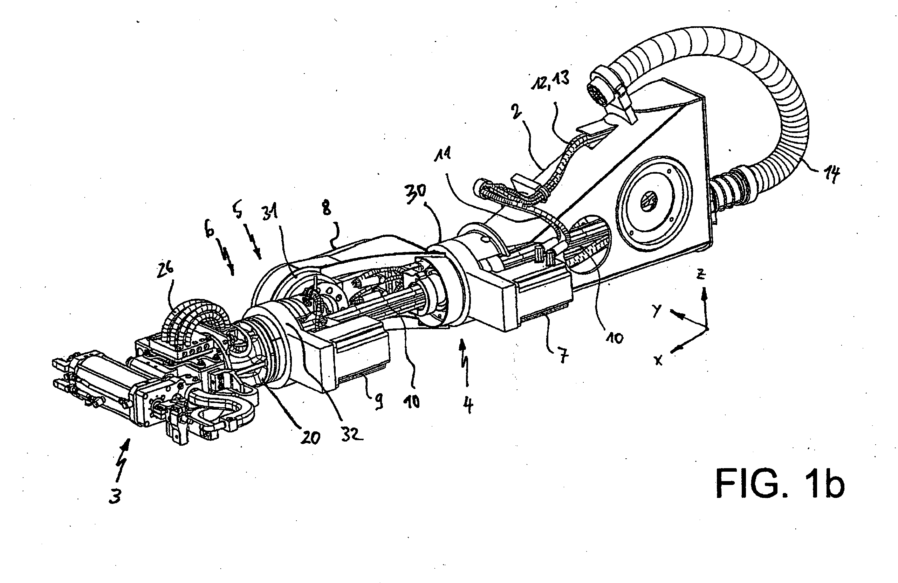

Fig. 1b zeigt eine perspektivische Darstellung einer weiteren beispielhaften Ausführungsform des erfindungsgemäßen Roboterarms in einer ersten Stellung ähnlich wie Fig. 1a.

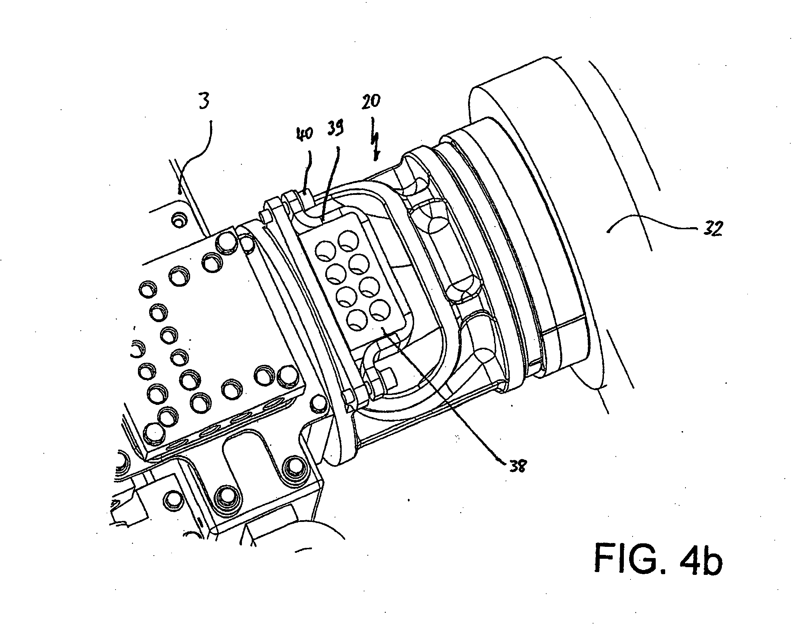

In Fig. 1b ist der Anschlussflansch 20 in einer einteiligen Ausführung ausgebildet. An dem Anschlussflansche 20 ist das Werkzeug 3 befestigt, welches hier nur beispielhaft als ein Punktschweißwerkzeug dargestellt ist. Versorgungsleitungen des Werkzeugs 3 sind in Einzelsträngen 26 von einem Klemmteil 38 zu dem Werkzeug 3 geführt. Dabei verlaufen alle Einzelstränge aus dem Inneren des Anschlussflansches 20 seitlich (hier nach oben) heraus und sind an dem Anschlussflansch 20 an dem Klemmteil 38 lösbar befestigt, zum Beispiel mittels einer PG-Verschraubung. Der Bereich dieses einteiligen Anschlussflansches 26 ist weiter unten mit Bezug auf Fig. 4b näher beschrieben.

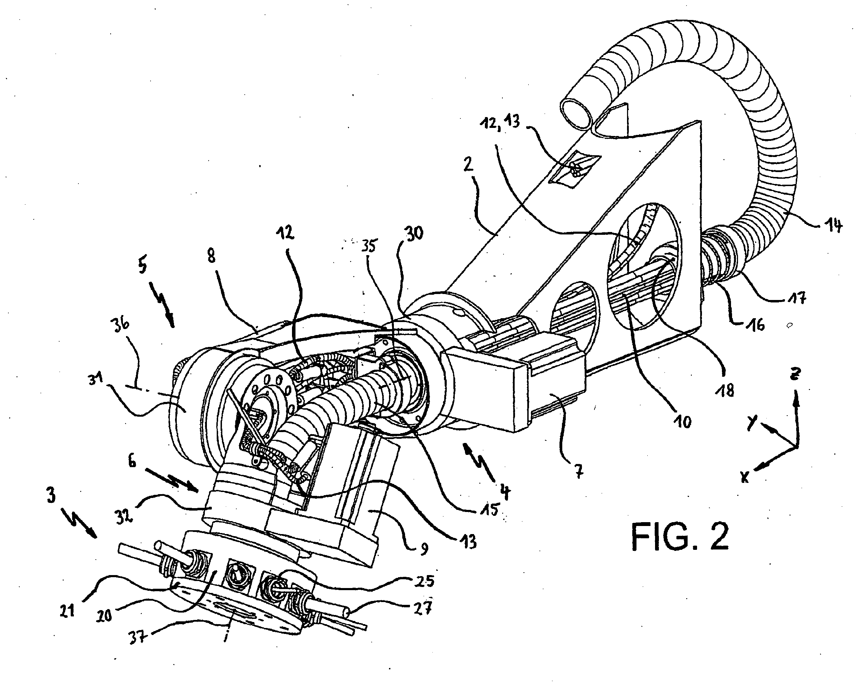

Fig. 2 zeigt hierzu als Verdeutlichung eine zweite Stellung der in Fig. 1a gezeigten Ausführung, wobei eine verschwenkte Stellung des Antriebsflansches 20 um die zweite Achse 36 gezeigt ist.

Der Antriebsflansch 20 ist an seiner Vorderseite mit einem Flanschdeckel 21 versehen, welcher zur Anbringung des Werkzeugs 3 (hier nicht dargestellt) dient, wie zum Beispiel die Schweißzange für Punktschweißungen nach Fig. 1b. Der Antriebsflansch 20 wird weiter unten noch ausführlich erläutert.

Dieses Werkzeug 3 benötigt für seine Funktion eine entsprechende Energieversorgung wie oben kurz erwähnt. In dem angeführten Beispiel einer Punktschweißeinrichtung können dies beispielsweise sein: Elektrische Leistungskabel zur Erzeugung der Schweißenergie und für den Antrieb zum Schließen und Öffnen der Zange, Leitungen für elektrische Signale zur Steuerung und zur Weiterleitung von Messsignalen, sowie beispielsweise auch Fluidleitungen zur Kühlung der Elektroden. Alle diese Leitungen sind unter dem Begriff Energiezuführung 10 zusammengefasst, welche zum Beispiel als ein flexibles Schlauchpaket ausgebildet ist.

Die Energiezuführung 10 verläuft von einer üblichen Schnittstelle oben auf der Armbasis 2 ausgehend in einem Bogen innerhalb eines ersten Schutzelementes 14, zum Beispiel ein relativ flexibles Wellrohr, hinter der Armbasis 2 (rechts in der Fig. 2) mittig in diese hinein. Auf Grund ihres Aufbaus ist die Armbasis 2 hohl und gestattet somit den Verlauf der Energiezuführung in ihrer Längsachse, der ersten Achse 35.

Am Eintrittspunkt in die Armbasis 2 ist eine erste Feder 16 um das erste Schutzelement 14 herum angeordnet, welche sich an einem ersten Auflager 17, das fest mit dem ersten Schutzelement verbunden ist, und einem zweiten Auflager 18 (siehe Fig. 2) abstützt. Das zweite Auflager 18 kann ein separates Teil oder ein Abschnitt der Armbasis 2 sein. Die erste Feder 16 ermöglicht beim Verdrehen der Hand einen Längenausgleich der Energiezuführung 3 zwischen dem Eintrittspunkt an der Armbasis 2 und dem Anschlussflansch 20.

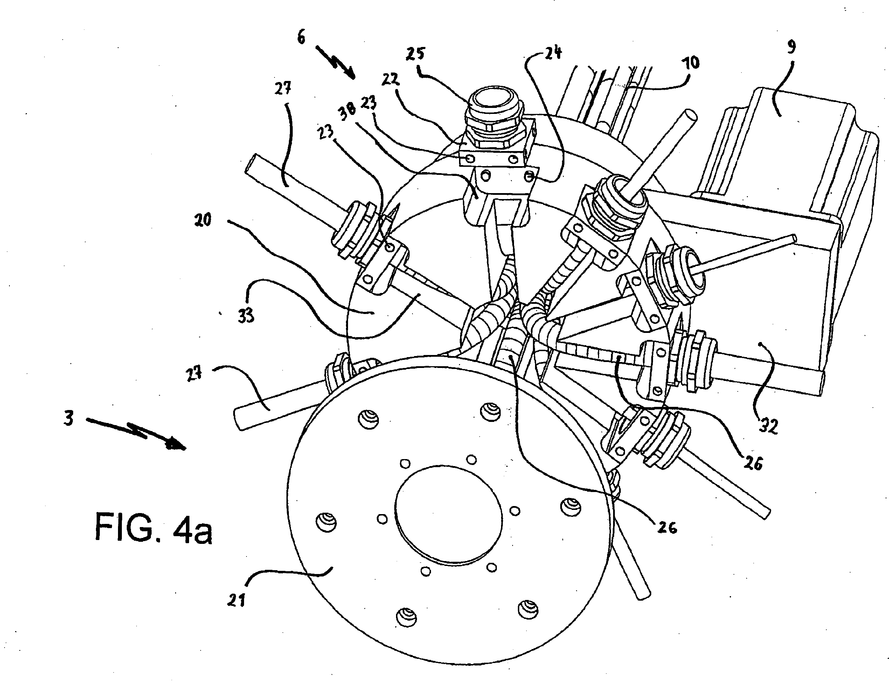

Die Energiezuführung 10 tritt dann durch das erste Hohlgelenk 4 in Richtung der ersten Achse 35 aus und verläuft dann durch ein zweites Schutzelement 15, zum Beispiel ebenfalls ein Wellrohr, an dem zweiten Hohlgelenk 5 vorbei durch das dritte Hohlgelenk 6 in den Antriebsflansch 20 hinein. Hier sind die Leitungen, aus denen die Energiezuführung 10 besteht, als Einzelstränge 26 vereinzelt, wie weiter unten in Bezug auf Fig. 4 erläutert wird, und treten radial aus dem Anschlussflansch 20 als Leitungen 27 aus Durchführungselementen 25 aus, wonach sie dann an dem Werkzeug 3 (nicht dargestellt) in entsprechender Weise angeschlossen sind.

Die Antriebe 7, 8, 9 sind hier als Elektromotoren ausgeführt und jeweils mit Antriebsverkabelungen 11, 12, 13 versehen, über welche sie mit elektrischer Energie und Steuersignalen versorgt werden bzw. Messsignale bezüglich ihrer Position abgeben.

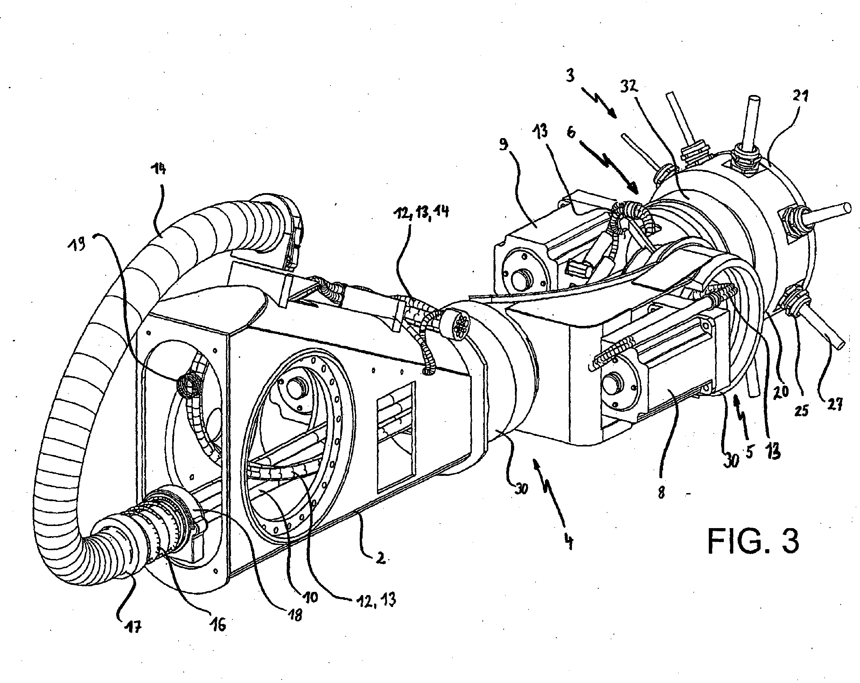

Die erste Antriebsverkabelung 11 für den ersten Antrieb 7 ist fest installiert und zu einer gemeinsamen Schnittstelle auf der Armbasis 2 (siehe Fig. 1 und 3) geführt.

Die zweite Antriebsverkabelung 12 für den zweiten Antrieb 8 verläuft neben dem zweiten Antrieb 8 bis zum ersten Hohlgelenk 4, wo sie zusammen mit der Energiezuführung 10 hindurch geführt ist, was weiter unten noch näher erläutert wird.

Die dritte Antriebsverkabelung 13 für den dritten Antrieb 9 ist durch das zweite Hohlgelenk 5 hinter dem zweiten Antrieb 8 (siehe Fig. 3) geführt und wird dann ebenfalls zusammen mit der Energiezuführung 10 und der zweiten Aritriebsverkabelung 12 durch das erste Hohlgelenk 4 geführt.

Die beiden Antriebsverkabelungen 12 und 13 verlaufen dann im Inneren der Armbasis 2 in einem Bogen nach oben (siehe Fig. 3) und treten auf der Armbasis 2 durch eine Öffnung aus, wonach sie mit der ersten Antriebsverkabelung 11 an der zugehörigen Schnittstelle angeschlossen sind.

Wie in Fig. 3 zu erkennen ist, sind die beiden Antriebsverkabelungen 12 und 13 innerhalb der Armbasis 2 in diesem Beispiel mit einer zweiten Feder 19 zusammenwirkend gekoppelt, welche für einen gespannten Zustand der Antriebsverkabelungen 12 und 13 innerhalb der Armbasis 2 in ähnlicher Weise wie die erste Feder 18 dient.

Fig. 4a zeigt eine vergrößerte perspektivische Darstellung des Anschlussflansches 20 der Ausführungsform nach Fig. 1a mit dem dritten Antrieb 9, welcher direkt am dritten Getriebe 32 angeordnet ist.

Hierbei ist der Flanschdeckel 21 von der gezeigten Stirnseite des Anschlussflansches 20 demontiert. Der Anschlussflansch 20 ist in diesem Beispiel auf seiner Stirnseite mit Kanälen 33 versehen, welche sich radial von seiner Mitte nach außen erstrecken und an ihren äußeren Enden jeweils in einer Ausnehmung 38 münden. Selbstverständlich sind auch andere Gestaltungen für die Kanäle 33, zum Beispiel mittels einsetzbarer oder montierbarer Stege, möglich.

Die Energiezuführung 10 tritt mittig in den Anschlussflansch 20 ein, wobei sie in Einzelstränge 26 vereinzelt wird, die jeweils in den Kanälen 33 radial nach außen geführt sind.
Die Einzelstränge 26 sind in diesem Beispiel jeweils mit einem Schutzschlauch umgeben, der bis zu dem jeweiligen Durchführungselement 25 verläuft.

Die Durchführungselemente 25 sind in diesem Beispiel Kabelverschraubungen, zum Beispiel PG-Verschraubungen, und sind jeweils auf einem Halteelement 22 angebracht.

Das Halteelement 22 ist in diesem Beispiel plattenförmig und korrespondiert zu den Abmessungen der Ausnehmung 38 in dem Umfang des Anschlussflansches 20. Das Halteelement 22 ist in diesem Beispiel mit Bohrungen 23 versehen, welche sich rechtwinklig zur Durchführungsrichtung des Durchführungselementes 25 erstrecken und zu Stiften 24 korrespondieren, die innerhalb der Ausnehmung 38 und gegenüberliegend auf der Flanschdeckelinnenseite (nicht gezeigt) angeordnet sind. Das Halteelement 28 ist somit in die Ausnehmung 38 in Richtung der dritten Achse 37 auf die Stifte 24 ohne Werkzeug einsetzbar. Durch Befestigung des Flanschdeckels 21 auf der hier gezeigten Stirnseite des Anschlussflansches 20 in der Weise, dass die Stifte 24 des Flanschdeckels 21 ebenfalls in die Bohrungen 23 gegenüberliegend zu den Stiften 24 in den Ausnehmungen 38 des Anschlussflansches 20 eingreifen, sind die Halteelemente 22 mit den Durchführungselementen 25 und den darin in üblicher Weise festgelegten Leitungen 27 form- und kraftschlüssig mit dem Anschlussflansch 20 verbunden. Die Durchführungselemente 25 können vorher bei der Vereinzelung der Einzelstränge 26 auf diesen in erleichterter Weise vormontiert werden.

Es sind in diesem Beispiel keine Steckanschlüsse an den Durchführungselementen 25 vorgesehen, obwohl dieses in einer anderen Ausführung denkbar ist. Die Leitungen 27 werden an der Hand 3 oder dem Werkzeug direkt oder über Verbindungsleitungen angeschlossen.

Die Leitungen 27 treten aus den Durchführungselementen 25 des Anschlussflansches 20 aus und können
- fixe Längen bis zum Werkzeug aufweisen;
- offene Längen ohne Steckverbindungen besitzen;
- kurze Längen mit Steckverbindungen zum Anschluss von Verbindungsleitungen umfassen.

Fig. 4b zeigt eine vergrößerte perspektivische Darstellung des einteiligen Anschlussflansches 20 der Ausführungsform nach Fig. 1b.

Die Einzelstränge 26 sind der Übersichtlichkeit halber nicht gezeigt. Der Anschlussflansch 20 ist mit dem Klemmteil 38 versehen, welches an ihm mit einem Bügel 39 und Befestigungselementen 40, zum Beispiel Schrauben, befestigt ist. Das Klemmteil 38 ist in diesem Beispiel eine Platte mit Bohrungen, in welche beispielsweise PG-Verschraubungen zur Durchführung der Einzelstränge 26 einbringbar sind.

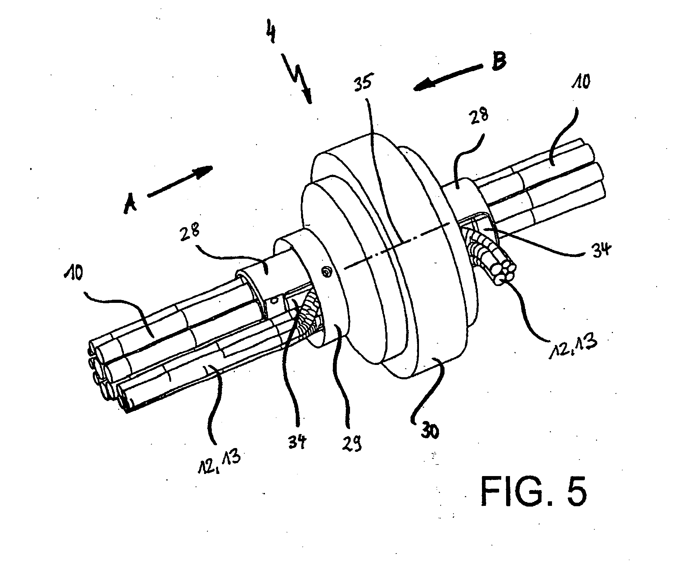

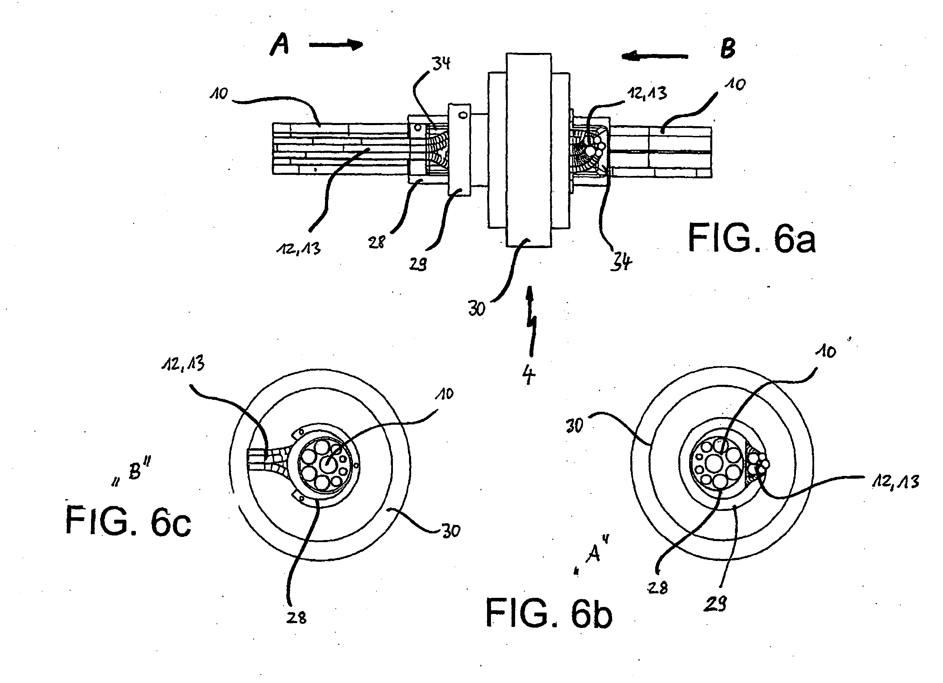

Fig. 5 zeigt eine perspektivische Teilansicht des ersten Hohlgelenks 4 aus Fig. 1 mit Energiezuführung 10 und Antriebsverkabelung 12 und 13, wobei Fig. 6a-6c eine Seitenansicht des ersten Hohlgelenks 4 nach Fig. 5 und zwei Draufsichten des ersten Hohlgelenks 4 zur weiteren Verdeutlichung darstellen. Auf beide Figuren 5 und 6 wird nun Bezug genommen.

Die dargestellten Ansichten des ersten Hohlgelenks 4 in Fig. 5 und 6 sind Ansichten aus der Position der Fig. 3, in welcher das erste Hohlgelenk 4 durch den zweiten Antrieb 8 nicht sichtbar ist.

Auf der linken Seite der Fig. 5 mit der Bezeichnung A ist der Bereich zwischen dem ersten Hohlgelenk 4 und dem dritten Hohlgelenk 6 gemäß Fig. 1 bezeichnet. Die Bezeichnung B gibt die Seite des Bereichs innerhalb der Armbasis 2 gemäß Fig. 1 an. Gleichzeitig bedeuten die Bezeichnungen A und B Ansichten des Hohlgelenks 4, welche jeweils in den Figuren 6b und 6c dargestellt sind.

Die Energiezuführung 10 und die beiden Antriebsverkabelungen 12' und 13 sind durch das Hohlgelenk 4 mit dem Getriebe 30 in Richtung der ersten Achse 35 hindurchgeführt. Sie verlaufen innerhalb einer Zweikammerführungsbuchse 28, deren Ansichten A und B in den Fig. 6b und 6c deutlicher gezeigt sind. Eine Kammer der Zweikammerführungsbuchse 28 führt die Energiezuführungen 10, und eine weitere daneben angeordnete Kammer führt die Antriebsverkabelungen 12 und 13. Die Anzahl der Einzelstränge 26 der Energiezuführung 10 und die Anzahl der Antriebsverkabelungen 12 und 13 sind nicht auf dieses Beispiel beschränkt.

Die Kammer für die Antriebsverkabelungen 12 und 13 ist mit einer zusätzlichen Führung 34, die auf beiden Seiten der Zweikammerführungsbuchse 28 angeordnet ist, und auf der Seite A mit einem Kragen 29 versehen, wodurch eine Führung der Antriebsverkabelungen 12 und 13 einfach und sicher gestaltet ist. Der Kragen 29 weist einen bestimmten Radius zur Einführung der Antriebsverkabelung 12 und 13 auf, um möglichst geringe Reibung zu erzeugen. Außerdem ist durch die Zweikammerführungsbuchse 28 eine Längsbewegung der Energiezuführung 10 unabhängig von einer Längsbewegung der Antriebsverkabelungen 12 und 13 möglich.

In Fig. 7 ist der Roboter 1 in einer beispielhaften Ausführung von der Seite her gezeigt. Die von der Basis B her außen an der Schwinge SW verlaufende Energiezuführung 10 tritt nach einem Bogen über der Armbasis 2 in diese ein, wie oben beschrieben ist.

Bei Betrieb des Industrieroboters wird die Energiezuführung 10 in zwei Haupttorsionsbereichen beansprucht, nämlich innerhalb der Armbasis 2 und im ersten Schutzelement 14. Mit dieser Ausführung wird eine hohe Lebensdauer der Energiezuführung 10 erreicht.

Die erfindungsgemäße Anordnung 1 ist nicht auf die beschriebenen und in den Figuren dargestellten Ausführungen beschränkt. Es sind Modifikationen und Änderungen im Rahmen der beigefügten Ansprüche möglich.

### Bezugszeichenliste

- 1: Roboter
- 2: Armbasis
- 3: Werkzeug
- 4: Erstes Hohlgelenk
- 5: Zweites Hohlgelenk
- 6: Drittes Hohlgelenk
- 7: Erster Antrieb
- 8: Zweiter Antrieb
- 9: Dritter Antrieb
- 10: Energiezuführung
- 11: Erste Antriebsverkabelung
- 12: Zweite Antriebsverkabelung
- 13: Dritte Antriebsverkabelung
- 14: Erstes Schutzelement
- 15: Zweites Schutzelement
- 16: Erste Feder
- 17: Erstes Auflager
- 18: Zweites Auflager
- 19: Zweite Feder
- 20: Anschlussflansch
- 21: Flanschdeckel
- 22: Halteelement
- 23: Bohrung
- 24: Stift
- 25: Durchführungselement
- 26: Einzelstrang
- 27: Leitung
- 28: Zweikammerführungsbuchse
- 29: Kragen
- 30: Erstes Getriebe
- 31: Zweites Getriebe
- 32: Drittes Getriebe
- 33: Kanal
- 34: Führung
- 35: Erste Achse
- 36: Zweite Achse
- 37: Dritte Achse
- 38: Klemmteil
- 39: Bügel
- 40: Befestigungselement
- B: Basis
- SO: Sockel
- SW: Schwinge
- I: Achse 1
- II: Achse 2
- III: Achse 3
- IV: Achse 4
- V: Achse 5
- VI .: Achse 6
- x, y, z: Koordinaten

## Patentansprüche

1. Roboterarm für einen Industrieroboter, aufweisend:
- einen Anschlussflansch (20) für ein Werkzeug (3), welcher an einer Armbasis (2) über zumindest ein Hohlgelenk (4, 5, 6) um zumindest eine Achse (35, 36, 37) relativ zu der Armbasis (2) drehbar angeordnet ist;
- eine Energiezuführung (10) für das Werkzeug (3), welche sich durch einen Hohlraum der Armbasis (2) und durch das zumindest eine Hohlgelenk (4, 6) in den Anschlussflansch (20) erstreckt;
**dadurch gekennzeichnet, dass** zumindest ein Einzelstrang (26) der Energiezuführung (10) seitlich aus dem Anschlussflansch (20) herausgeführt, und von außen lösbar am Anschlussflansch (20) befestigt ist und die Energiezuführung (10) mit einer ersten Feder (16) in Zusammenwirkung steht, durch welche die Energiezuführung (10) in ihrem Verlauf durch die Armbasis (2) bis zum Anschlussflansch (20) vorgespannt ist.

2. Roboterarm nach Anspruch 1, bei welchem ein erstes Schutzelement als Übertragungsglied zur Einleitung einer Federkraft in die Energiezuführung dient, um eine Vorspannung in der Energiezuführung innerhalb der Armbasis bis zum Anschlussflansch aufrecht zu erhalten.

3. Roboterarm nach Anspruch 1 oder 2, bei welchem die Energiezuführung (10) zumindest abschnittsweise und zwar vor Eintritt in die Armbasis (2) mit einem ersten Schutzelement (14) und/oder zwischen der Armbasis (2) und dem Anschlussflansch (20) mit einem zweiten Schutzelement (15) mit einem Schutzelement (14, 15) umgeben ist.

4. Roboterarm nach einem der Ansprüche 1 bis 3, bei welchem der zumindest eine Einzelstrang (26) im Anschlussflansch (20) in radialer Richtung durch den Umfang des Anschlussflansches (20) nach außen geführt ist.

5. Roboterarm nach einem der Ansprüche 1 bis 4, bei welchem der Anschlussflansch (20) zumindest ein Durchführungselement (25) zur Durchführung und Befestigung des zumindest einen Einzelstrangs (26) der Energiezuführung (10) aufweist.

6. Roboterarm nach Anspruch 5, bei welchem das zumindest eine Durchführungselement (25) auf einem Halteelement (22) angeordnet ist, welches am Anschlussflansch (20) befestigbar ist und das Bohrungen (23) aufweist, welche mit am Anschlussflansch (20) und am Flanschdeckel (21) angebrachten korrespondierenden Stiften (24) derart in Eingriff bringbar sind, dass das Halteelement (22) bei an dem Anschlussflansch (20) befestigten Flanschdeckel (21) mit diesem und dem Anschlussflansch (20) form- und kraftschlüssig verbunden ist.

7. Roboterarm nach einem der Ansprüche 1 bis 6, bei welchem der Anschlussflansch (20) über ein erstes Hohlgelenk (4) drehbar um eine erste Achse (35), welche die Längsachse der Armbasis (2) ist, über ein zweites Hohlgelenk (5) drehbar um eine in einem Winkel zu der ersten Achse (35) verlaufende zweite Achse (36) und über ein drittes Hohlgelenk (6) drehbar um eine in einem Winkel zu der zweiten Achse (35) verlaufende dritte Achse (37) angeordnet ist.

8. Roboterarm nach Anspruch 7, bei welchem das erste Hohlgelenk (4) ein erstes Getriebe (30) mit einem daran angeordneten ersten Antrieb (7) zur Drehung des zweiten Hohlgelenks (5) um die erste Achse (35), das zweite Hohlgelenk (5) ein zweites Getriebe (31) mit einem daran angeordneten zweiten Antrieb (8) zur Drehung des dritten Hohlgelenks (6) um die zweite Achse (36) und das dritte Hohlgelenk (6) ein drittes Getriebe (32) mit einem daran angeordneten dritten Antrieb (9) zur Drehung des Anschlussflansches (20) um die dritte Achse (37) aufweist.

9. Roboterarm nach Anspruch 3, bei welchem die erste Feder (16) zwischen einem ersten Auflager (17), welches mit dem ersten Schutzelement (14) fest verbundenen ist, und der Armbasis (2) angeordnet ist.

10. Roboterarm nach Anspruch 8, bei welchem der zweite und dritte Antrieb (8, 9) jeweils eine Antriebsverkabelung (12, 13) aufweisen, welche sich zusammen mit der Energiezuführung (10) durch das erste Hohlgelenk (4) in Richtung der ersten Achse (35) erstrecken.

11. Roboterarm nach Anspruch 10, bei welchem die Antriebsverkabelungen (12, 13) und die Energiezuführung (10) durch eine Zweikammerführungsbuchse (28) durch das erste Hohlgelenk (4) geführt angeordnet sind.

12. Roboterarm nach Anspruch 11, bei welchem die Zweikammerführungsbuchse (28) zumindest auf einer Seite einen Kragen (29) zur Führung der Antriebsverkabelungen (12, 13) aufweist.

13. Roboterarm nach einem der Ansprüche 10 bis 12, bei welchem eine zweite Feder (19) zur Erzeugung einer Vorspannung der Antriebsverkabelungen (12, 13) in Zusammenwirkung mit den Antriebsverkabelungen (12, 13) vorgesehen ist.

14. Industrieroboter, aufweisend einen Roboterarm nach einem der Ansprüche 1 bis 13.

## Claims

1. Robotic arm for an industrial robot comprising:
- a mountable flange 20) for a tool (3) which is assigned to an arm base (2) over at least one hollow joint (4, 5, 6) and rotatable relative to the arm basis (2) about at least one axis (35, 36, 37);
- a power supplying system (10) for the tool (3), which extends through a cavity in the arm base (2) and through the at least one hollow joint (4, 6) in the mountable flange (20);
**characterized in that** at least a single strand (26) of the power supplying system (10) is led out of the side from the mounting flange (20) and disconnectable from the mounting flange (20) from without and the power supplying system (10) works together with a first spring (16), through which the power supplying system (10) is biased in its course through the arm base (2) to the mounting flange (20).

2. Robot arm of claim 1, in which a first protective element serves as a transmission link for the introduction of a spring force in the power supplying system in order to maintain a bias in the power supplying system within the arm base (2) up through the mounting flange (20).

3. Robot arm according to claim 1 or 2, in which the power supplying system (10) at least sectionally and indeed before entry into the arm base (2) is covered with a first protective element (14) and/or between the arm base (2) and the mounting flange (20) with a second protective element (15).

4. Robot arm according to one of the claims 1 to 3, in which at least one single strand (26) in the mounting flange (20) leads in radial direction through the circumference of the mounting flange (20) to the outside.

5. Robot arm according to one of the claims 1 to 4, in which the mounting flange (20) comprises at least one through element (25) for carrying through and attaching the at least one single strand (26) of the power supplying system (10).

6. Robot arm according to claim 5 in which the at least one through element (25) is assigned to a holding element (22), which is attachable to the mounting flange (20) and comprises holes (23), which (25) are set up with the corresponding pins (24) located on the mounting flange (20) and the flange cover (21) in such a way that the holding element (22) is connected in a friction locked way with the flange cover (21) located on the mounting flange (20).

7. Robot arm according to one of the claims 1 to 6, in which the mounting flange (20) is rotatable about a first hollow joint (4) arranged around a first axis (35), which is the longitudinal axis of the arm base (2), over a second hollow joint (5), which is rotatable around a second axis (36) in an angle point running from the first axis (35) and rotatable over a third hollow joint (6) in an angle point running from the second axis (35) to the third axis (37).

8. Robot arm according to claim 7, in which the first hollow joint (4) comprises a first transmission (30) with a first drive (7) assigned to it to turn the second hollow joint (5) around the first axis (35) and the second hollow joint (5) comprises a second transmission (31) with a second drive (8) assigned to it to turn the third hollow joint (6) around the second axis (36) and the third hollow joint (6) comprises a third transmission (32) with a third drive (9) assigned to it to turn the mounting flange (20) about the third axis (37).

9. Robotic arm according to claim 3, in which the first spring (16) is arranged between a first support (17), which is permanently attached to the first protective element (14), and to the arm base(2).

10. Robot arm according to claim 8, in which the second and third drive (8, 9) each comprises a drive cable (12, 13), which extend along with the power supplying system (10) through the first hollow joint (4) in the direction of the first axis (35).

11. Robot arm according to claim 10, in which the drive cables (12, 13) and the power supplying system (10) are arranged by a dual-chamber bush (28) so that they are led out through the first hollow joint (4).

12. Robot arm according to claim 11, in which the dual chamber bush (28) comprises at least on one side a collar (29) to guide the drive cables (12, 13).

13. Robotic arm according to one of the claims 10 to 12, in which a second spring (19) is provided for generating a bias force from the drive cables (12, 13) in conjunction with the drive cables (12, 13).

14. Industrial robot comprising a robotic arm according to one of the claims 1 to 13.

## Revendications

1. Bras de robot pour un robot industriel, présentant :
- une bride de raccordement (20) pour un outil (3) qui est agencé rotative sur une base de bras 82) par l'intermédiaire d'au moins une articulation creuse (4, 5, 6) autour d'au moins un axe (35, 36, 37) par rapport à la base de bras (2) ;
- une alimentation en énergie (10) pour l'outil (3) qui s'étend dans la bride de raccordement (20) à travers une cavité de la base de bras (2) et à travers ladite au moins une articulation creuse (4, 6) ;
**caractérisé en ce qu'**au moins un tube individuel (26) de l'alimentation en énergie (10) sort latéralement hors de la bride de raccordement (20) et est fixé sur la bride de raccordement (20) depuis l'extérieur de manière détachable, et l'alimentation en énergie (10) est en coopération avec un premier ressort (16) par lequel l'alimentation en énergie est précontrainte dans son passage à travers la base de bras (2) jusqu'à la bride de raccordement (20).

2. Bras de robot selon la revendication 1, dans lequel un premier élément de protection sert d'organe de transmission pour introduire une force de ressort dans l'alimentation en énergie pour maintenir une précontrainte dans l'alimentation en énergie à l'intérieur de la base de bras jusqu'à la bride de raccordement.

3. Bras de robot selon la revendication 1 ou 2, dans lequel l'alimentation en énergie (10) est entourée, avant l'entrée dans la base de bras (2), au moins par tronçons par un premier élément de protection (14) et/ou entre la base de bras (2) et la bride de raccordement (20), par un deuxième élément de protection (14, 15).

4. Bras de robot selon l'une des revendications 1 à 3, dans lequel ledit au moins un tube individuel (26) est guidé dans la bride de raccordement (20) en direction radiale à travers la périphérie de la bride de raccordement (20) vers l'extérieur.

5. Bras de robot selon l'une des revendications 1 à 4, dans lequel la bride de raccordement (20) présente au moins un élément de passage (25) pour faire passer et pour fixer ledit au moins un tube individuel (26) de l'alimentation en énergie (10).

6. Bras de robot selon la revendication 5, dans lequel ledit au moins élément de passage (25) est agencé sur un élément de retenue (22) qui peut être fixé sur la bride de raccordement (20) et qui présente des alésages (23) qui peuvent être amenés en engagement avec des pointes (24) correspondantes ménagées sur la bride de raccordement (20) et sur le couvercle de bride (21), de telle sorte que lorsque le couvercle de bride (21) est fixé sur la bride de raccordement (20), l'élément de retenue (22) est relié à celui-ci et à la bride de raccordement (20) par coopération de formes et de forces.

7. Bras de robot selon l'une des revendications 1 à 6, dans lequel la bride de raccordement (20) est agencée rotative autour d'un premier axe, qui est l'axe longitudinal de la base de bras (2), par l'intermédiaire d'une première articulation creuse (4), rotative autour d'un deuxième axe (36) s'étendant sous un angle par rapport au premier axe (35), par l'intermédiaire d'une deuxième articulation creuse (5), et rotative autour d'un troisième axe (37) s'étendant sous un angle par rapport au deuxième axe (35), par l'intermédiaire d'une troisième articulation creuse (6).

8. Bras de robot selon la revendication 7, dans lequel la première articulation creuse (4) présente un premier engrenage (30) avec un premier entraînement (7) agencé sur celui-ci pour faire tourner la deuxième articulation creuse (5) autour du premier axe (35), la deuxième articulation creuse (5) présente un deuxième engrenage (31) avec un deuxième entraînement (8) agencé sur celui-ci pour faire tourner la troisième articulation creuse (6) autour du deuxième axe (36), et la troisième articulation creuse (6) présente un troisième engrenage (32) avec un troisième entraînement (9) agencé sur celui-ci pour faire tourner la bride de raccordement (20) autour du troisième axe (37).

9. Bras de robot selon la revendication 3, dans lequel le premier ressort (16) est agencé entre un premier appui (17) qui est relié solidaire au premier élément de protection (14), et la base de bras (2).

10. Bras de robot selon la revendication 8, dans lequel les deuxième et troisième entraînements (8, 9) présentent chacun un câblage d'entraînement (12, 13) qui s'étendent conjointement avec l'alimentation en énergie (10) à travers la première articulation creuse (4) en direction du premier axe (35).

11. Bras de robot selon la revendication 10, dans lequel les câblages d'entraînement (12, 13) et l'alimentation en énergie (10) sont agencés guidés à travers une douille de guidage à deux chambres (28) à travers la première articulation creuse (4).

12. Bras de robot selon la revendication 11, dans lequel la douille de guidage à deux chambres (28) présente au moins sur un côté un col (29) pour guider les câblages d'entraînement (12, 13).

13. Bras de robot selon l'une des revendications 10 à 12, dans lequel un deuxième ressort (19) est prévu pour engendrer une précontrainte des câblages d'entraînement (12, 13) en coopération avec les câblages d'entraînement (12, 13).

14. Robot industriel, présentant un bras de robot selon l'une des revendications 1 à 13.
